# EUROPÄISCHE PATENTANMELDUNG

(11) **EP 1 473 131 A2**
(43) Veröffentlichungstag der Anmeldung: **03.11.2004**
(21) Anmeldenummer: 04008163.0
(22) Anmeldetag: 03.04.2004
(51) Int. Cl.: B29B 11/16

(54) **Verfahren zum herstellen textiler vorformlinge aus textilen halbzeugen**

(30) Priorität: 30.04.2003 DE 10320791
(71) Anmelder: Airbus Deutschland GmbH, 21129 Hamburg (DE); FRAUNHOFER-GESELLSCHAFT ZUR FÖRDERUNG DER ANGEWANDTEN FORSCHUNG E.V., 80686 München (DE)
(72) Erfinder: Eberth, Ulrich, Dipl.-Ing., 63897 Miltenberg (DE); Jörn, Paul, Dipl.-Ing., 22763 Hamburg (DE)
(74) Vertreter: Hansmann, Dierk, Dipl.-Ing.

(57) **Zusammenfassung**

Verfahren zum Herstellen textiler Vorformlinge (Preforms) aus textilen Halbzeugen (Vorprodukten), wobei die Vorformlinge insbesondere für die Herstellung von faser- verstärkten Kunststoffen vorgesehen sind, die vorzugsweise unter Verwendung eines Matrixsystems mit einem Klebeharz getränkt und ausgehärtet werden. Die textilen Halbzeuge werden jeweils auf einem Träger mit einer den späteren Vorformlingen entsprechenden Kontur bzw. angepassten Geometrie aufgebracht, wobei am Ende eines flächenbildenden zwei- oder dreidimensionalen Textilprozesses die noch nicht endgültig fixierten Fasern der textilen Halbzeuge durch einen Umform- und Drapier-vorgang in eine gewünschte Orientierung gebracht werden.

Um ein bauteilangepasste Fertigungsverfahren zu verbessern, dass ein aus mehreren textilen Vorformlingen bestehendes Bauteil hergestellt werden kann, ist vorgesehen, dass mehrere einzelne textile Vorformlinge in einem Kompaktierungsschritt derart zusammengebracht werden, dass ein hochkompaktes, endkonturennahes und zusammengesetztes Bauteil entsteht. Das zusammengesetzte Bauteil wird mit einem Klebeharz getränkt und unter erhöhter Temperatur sowie erhöhtem Druck ausgehärtet.

## Beschreibung

Die Erfindung betrifft ein Verfahren zum Herstellen textiler Vorformlinge. (Preforms) aus textilen Halbzeugen (Vorprodukten), wobei die Vorformlinge insbesondere für die Herstellung von faserverstärkten Kunststoffen vorgesehen sind, die vorzugsweise unter Verwendung eines Matrixsystems mit einem Klebeharz getränkt und ausgehärtet werden, wobei die textilen Halbzeuge jeweils auf einem Träger mit einer den späteren Vorformlingen entsprechenden , Kontur bzw. angepassten Geometrie aufgebracht werden, und wobei am Ende eines flächenbildenden zwei- oder dreidimensionalen Textilprozesses die noch nicht endgültig fixierten Fasern der textilen Halbzeuge durch einen Umform- und Drapiervorgang in eine gewünschte Orientierung gebracht werden.

Es ist bei einem nicht vorveröffentlichten bauteilangepasstes Fertigungsverfahren vorgesehen, nach unterschiedlichen textilen Verfahren hergestellte zweioder dreidimensionale Halbzeuge für die textilen Vorformlinge zu verwenden. Es wird dabei davon ausgegangen, dass bei der Herstellung faserverstärkter Kunststoffe unterschiedliche textile Vorprodukte, als Halbzeuge zur Anwendung kommen. Neben Geweben und Geflechten können Vliesstoffe und andere textile Flächengebilde eingesetzt werden. Diese Halbzeuge können in unterschiedlichen Verarbeitungsprozessen konfektioniert und miteinander kombiniert und verbunden werden. Die dabei entstehenden Vorformlinge (sog. Preforms) werden schließlich mit einem Matrixsystem getränkt und meist unter erhöhtem Druck und erhöhter Temperatur ausgehärtet.

Heute werden textile Vorprodükte wie z.B. Gewebe und Geflechte am Ende des Herstellprozesses in oder auf einen Zwischenträger aufgebracht. Bei Geflechten kann es sich dabei z. B. um zylindrische Körper handeln, um die diese umlaufend bahnförmig aufgewickelt werden. Die Geometrie dieser Träger dient nicht nur zum Vor- oder Umformen der Halbzeuge sondern auch als Hilfsmittel zum Transport und zur Lagerung.

Im Laufe des weiteren Herstellungsprozesses werden die Halbzeuge von dem Zwischenträgerkörper wieder entnommen, konfektioniert und anschließend durch Umorientierung und Umformung des Fasergebildes in die gewünschte Form (sog. Preform) gebracht.

Die Fixierung von Vorprodukten kann mit Hilfe eines Binders geschehen. Bei den verwendeten Bindersystemen handelt es sich hauptsächlich um thermoplastische oder duroplastischen Substanzen, die z. B. pulverförmig auf das Halbzeug aufgebracht und unter Temperatureinfluss aktiviert werden. Neben einer Festlegung der Faserorientierung können die Bindersysteme dazu verwendet werden, die Preforms in einem kompaktierten Zustand zu fixieren.

Der Erfindung liegt nun die Aufgabe zugrunde, das bauteilangepasste Fertigungsverfahren derart zu verbessern, dass ein aus mehreren textilen Vorformlingen bestehendes Bauteil hergestellt werden kann.

Die Aufgabe wird erfindungsgemäß dadurch gelöst, dass mehrere einzelne textile Vorformlinge in einem Kompaktierungsschritt derart zusammengebracht werden, dass ein hochkompaktes, endkonturennahes und zusammengesetztes Bauteil entsteht, und dass das zusammengesetzte Bauteil mit einem Klebehärz getränkt und unter erhöhter Temperatur sowie erhöhtem Druck ausgehärtet wird.

Ausgestaltungen des, erfindungsgemäßen Verfahrens bestehen darin,
- dass die textilen Vorformlinge aufeinander und gleichzeitig auf die Gesamtgeometrie des Bauteiles abgestimmt werden, und
- dass der Kompaktierungsschritt unter Verwendung eines Werkzeuges für Vakuumkompaktierung in einem Wärmeofen oder mit einer anderen Heizeinrichtung durchgeführt wird.

Eine Vorrichtung zur Durchführung des Verfahrens ist dadurch gekennzeichnet, dass ein Kompaktierungswerkzeug aus einem unteren Werkzeugteil und einem oberen Werkzeugteil besteht, und dass zwischen den beiden Werkzeugteilen die einzelnen textilen Vorformlinge zur Herstellung des hochkompakten, endkonturennahen und zusammengesetzten Bauteiles angeordnet sind.

Weiterbildungen der erfindungsgemäßen Vorrichtung bestehen darin,
- dass die einander benachbarten, das Bauteil einschließenden Flächen beider Werkzeugteile der Endgeometrie des hochkompakten und endkonturennahen Bauteiles angepasst sind,
- dass zwischen den das Bauteil einschließenden Flächen mindestens ein zentrierstift angeordnet sein kann, und
- dass das Kompaktierungswerkzeug mit seinen beiden werkzeugteilen, seinem Zentrierstift und den das Bauteil bildenden vorformlingen in einem, einen Unterdruck erzeugenden Vakuumsack zur Aufbringung von Druckkräften auf die beiden Werkzeugteile angeordnet ist.

Vorteile der Erfindung bestehen darin, dass nach dem Verfahren bzw. mit der Vorrichtung beispielsweise Fensterrahmen aus faserverstärkten Kunststoffen für Passagierflugzeuge hergestellt werden können. Derartige Kunststoff-Fensterrahmen, für die eine optimale Ausnutzung der faserverstärkten Kunststoffe gegeben ist, können die Fensterrahmen ersetzen, die bisher aus geschmiedeten Aluminiumteilen gefertigt wurden.

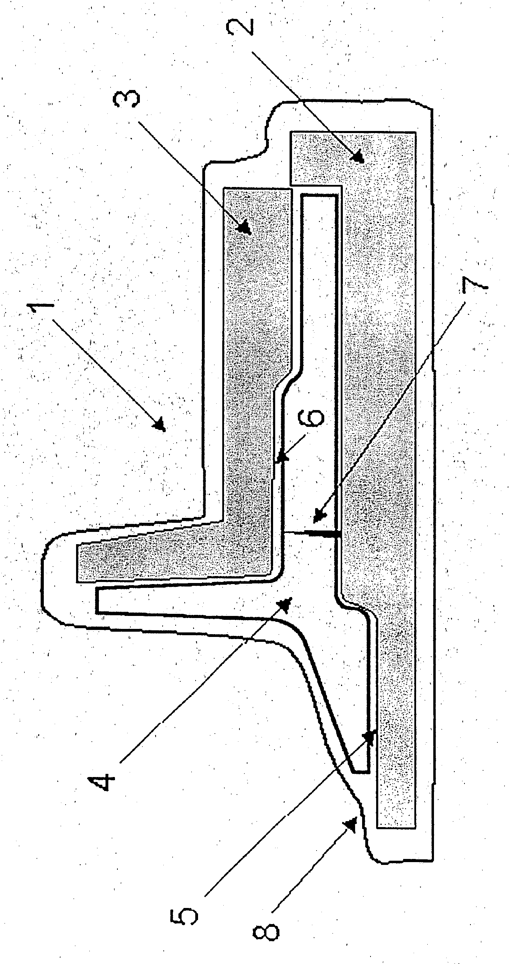

In der Zeichnung ist ein Ausführungsbeispiel nach der Erfindung dargestellt, und zwar zeigt die einzige Figur ein Werkzeug zur Kompaktierung von mehreren einzelnen textilen Vorformlingen zu einem hochkompakten, endkonturennahen und zusammengesetzten KunststoffBauteil. Das Werkzeug 1 besteht aus einem unteren werkzeugteil 2 und einem oberen Werkzeugteil 3, zwischen denen die einzelnen textilen Vorformlinge 4 angeordnet sind. Hierbei sind die einander benachbarten, das Bauteil 5 einschließenden Flächen 6 bzw. 7 beider Werkzeugteile 2 bzw. 3 der Endgeometrie des hochkompakten und endkonturennahen Bauteiles 5 angepasst. Zur Führung von Werkzeugunterteil 2 und werkzeugoberteil 3 während eines Pressvorganges dient ein mit 8 bezeichneter Zentrierstift, der zwischen den das Bauteil 5 einschließenden Flächen 6 und 7 angeordnet ist, wobei zweckmäßigerweise weitere derartige Zentrierstifte, die in vorgegebenen Abständen zueinander angeordnet werden, Verwendung finden können.

Wie der Figur weiterhin zu entnehmen ist, befindet sich das Kompaktierungswerkzeug 1 mit seinen beiden Werkzeugteilen 2 und 3, seinem Zentrierstift 8 und den das Bauteil 5 bildenden textilen Vorformlingen 4 in einem einen Unterdruck erzeugenden Vakuumsack 9. Der im Vakuumsack 9 erzeugte Unterdruck führt zur Aufbringung 'von Druckkräften auf beide Werkzeugteile 2 und 3, um eine endgültige Kompaktierung und den zusammenbau der einzelnen Vorformlinge 4 einzuleiten. Sollte hierzu das Vakuum alleine nicht ausreichen, so kann die Kompaktierung durch eine weitere Druckzufuhr über zeichnerisch nicht dargestellte Druckschläuche erzielt werden. Nach Vollendung des Kompaktierungsvorganges wird das zusammengesetzte Bauteil 5 mit einem Klebeharz getränkt und unter erhöhter Temperatur sowie erhöhtem Druck ausgehärtet.

## Patentansprüche

1. Verfahren zum Herstellen textiler Vorformlinge (Preforms) aus textilen Halbzeugen (Vorprodukten), wobei die Vorformlinge insbesondere für die Herstellung von faser- verstärkten Kunststoffen vorgesehen sind, die vorzugsweise unter Verwendung eines Matrixsystems mit einem Klebeharz getränkt und ausgehärtet werden, wobei die textilen Halbzeuge jeweils auf einem Träger mit einer den späteren Vorformlingen entsprechenden Kontur bzw. angepassten Geometrie aufgebracht werden, und wobei am Ende eines flächenbildenden zwei- oder dreidimensionalen Textilprozesses die noch nicht endgültig fixierten Fasern der textilen Halbzeuge durch einen Umform- und Drapiervorgang in eine gewünschte Orientierung gebracht werden, **dadurch gekennzeichnet, dass** mehrere einzelne textile Vorformlinge (4) in einem Kompaktierungsschritt derart zusammengebracht werden, dass ein hochkompaktes, endkonturennahes und zusammengesetztes Bauteil (5) entsteht, und dass das zusammengesetzte Bauteil (5) mit einem Klebeharz getränkt und unter erhöhter Temperatur sowie erhöhtem Druck ausgehärtet wird.

2. Verfahren nach Anspruch 1, **dadurch gekennzeichnet, dass** die textilen Vorformlinge (4) aufeinander und gleichzeitig auf die Gesamtgeometrie des Bauteiles (5) abgestimmt werden.

3. Verfahren nach Anspruch 1 oder 2, **dadurch gekennzeichnet, dass** der Kompaktierungsschritt unter Verwendung eines Werkzeuges für Vakuumkompaktierung in einem Wärmeofen oder einer anderen Heizeinrichtung durchgeführt wird.

4. Vorrichtung zur Durchführung des Verfahrens nach einem der Ansprüche 1, 2 oder 3, **dadurch gekennzeichnet, dass** ein Kompaktierungswerkzeug (1) aus einem unteen Werkzeugteil (2) und einem oberen Werkzeugteil (3) besteht, und dass zwischen den beiden Werkzeugteilen (2 bzw. 3) die einzelnen textilen Vorformlinge (4) zur Herstellung des hochkompakten, endkonturennahen und zusammengesetzten Bauteiles (5) angeordnet sind.

5. Vorrichtung nach Anspruch 4, **dadurch gekennzeichnet, dass** die einander benachbarten, das Bauteil (5) einschließenden Flächen (6 bzw. 7) beider Werkzeugteile (2 bzw. 3) der Endgeometrie des hochkompakten und endkonturennahen Bauteiles (5) angepasst sind.

6. Vorrichtung nach Anspruch 4 oder 5, **dadurch gekennzeichnet, dass** zwischen den das Bauteil (5) einschließenden Flächen (6 bzw. 7) mindestens ein Zentrierstift (8) angeordnet ist.

7. Vorrichtung nach Anspruch 4, 5 oder 6, **dadurch gekennzeichnet, dass** das Kompaktierungswerkzeug (1) mit seinen beiden Werkzeugteilen (2, 3), seinem Zentrierstift (8) und den das Bauteil (5) bildenden vorformlingen (4) in einem einen Unterdruck erzeugenden Vakuumsack (9) zur Aufbringung von Druckkräften auf die beiden Werkzeugteile (2, 3) angeordnet ist.
